# EUROPEAN PATENT APPLICATION

(11) **EP 1 126 651 A1**
(43) Date of publication of application: **22.08.2001**
(21) Application number: 00301205.1
(22) Date of filing: 16.02.2000
(51) Int. Cl.: H04L 1/00

(54) **Link adaptation for RT-EGPRS**

(71) Applicant: LUCENT TECHNOLOGIES INC., Murray Hill, New Jersey 07974-0636 (US)
(72) Inventor: Demetrescu, Christian, Twickenham, Middlesex TW2 5LY (GB); Samaras, Konstantinos, Swindon, Wiltshire SN2 2HL (GB); Samuel, Louis Gwyn, Abbey Mead, Swindon, Wiltshire SN2 3YG (GB); Tatesh, Said, Swindon, Wiltshire SN2 1BB (GB); Wu, Jian Ju, Reading, Berkshire (GB)
(74) Representative: Williams, David John

(57) **Abstract**

There is disclosed a technique for link adaptation, suitable for a packet switched mobile communication system, in which a command or request to change the mode of a codec in a transmitter is sent only responsive to a change in the condition of a received signal.

## Description

The present invention relates to a technique for link adaptation, and particularly but not exclusively for such a technique in an RT-EGPRS environment.

In GSM (Global System for Mobile Communications) there has been proposed a technique for link adaptation which is known as adaptive multi-rate (AMR) speech service. AMR improves speech service by increasing the spectrum efficiency of the system, and consequently gives system operators more flexibility in managing the network load.

In AMR in GSM a radio channel is dedicated to a user even during silence periods, which periods are known as discontinuous transmission (DTX). In AMR in GSM a user uses its allocated radio channel during discontinuous transmission to transmit silence identifier (SID) frames to set an appropriate level of background noise during silence period, and to transmit link adaptation messages to control the opposite direction of the link, which may still be active.

Typically a transceiver in a wireless communication system has a codec which generates synthesised speech for transmission over the radio interface. The codec includes a speech codec and a channel codec. The speech codec has several modes of operation, called the codec mode, which can be used for transmitting information. At the receiver end the same codec mode information must be used to speech decode the received signal.

In the current GSM proposal, it is proposed to have 8 codec modes of operation. Each codec mode represents a different coding rate, and the rate of coding is varied in accordance with the conditions in the channel. If signalling conditions are poor, a slow rate is used. If conditions are good, a fast rate is used. The current GSM proposal allows for 8 different codec modes having rates varying from 12.2 to 4.65 kbps. Full-rate GSM supports all 8 codec modes, half-rate GSM supports only the lower 6 codec modes.

In the up-link (UL) a mobile station (MS) sends alternatively to the network: a codec mode indication (2 bits) and a codec mode request (2 bits). The codec mode indication relates to the current codec used to transmit speech in the UL (i.e. the codec mode used in the transmitter in the mobile station), while the codec mode request is the mobile station preferred DL speech codec. The mobile station monitors the DL direction where speech is received and takes measurements of the carrier to interference ratio (CIR). The mobile station compares the measured CIR with the CIR threshold values stored in a table in the mobile station and makes a decision as to whether the DL codec mode should be changed or not.

In the down-link (DL) the network sends alternatively to the MS: a codec mode indication (2 bits for the current DL speech codec) and a codec mode command (2 bits for the UL speech codec). The codec mode indication relates to the current codec used to transmit speech in the down-link, whilst the codec mode command is the network determined up-link speech coded to be used by the MS. The same mechanism used to determine the UL mode request is used to determine the codec mode change in the DL.

During the speech activity the codec mode indication and codec mode request/command are sent every other speech frame as in-band signalling. For example, the codec indication mode is sent in odd numbered radio blocks (one radio block is 20 ms time period over a radio channel which is a time slot in a certain frequency) while a request or command is sent in even numbered radio blocks.

During the discontinuous transmission (DTX) a silence descriptor (SID) update frame, identified as the SID_UPDATE frame, carries the codec mode information (i.e. mode indication and mode request or command in the same frame) as well as the comfort noise parameters.

The SID_UPDATE is only one frame (not two as in speech) and therefore only 20ms of radio capacity is enough to send it. Thus the codec mode indication and request/command are all sent in the same 20 ms radio block. The SID_UPATE transmission is indicated using the stealing bits (another in band signalling used in a GSM burst).

In GSM DTX the SID_UPDATE is sent about every 160 ms for both full-rate (FR) and half-rate (HR) channel modes. During discontinuous transmission (DTX) the receiver is in a speech pause (inactivity period) where no speech is generated. However during DTX the SID_UPDATE is generated every 480ms and link adaptation messages are sent every 160 ms as part of an SID_UPDATE frame.

The SID_UPDATE carries the comfort noise parameters required to update the background noise at the receiver.

Although there are techniques known for supporting link adaptation in packet switched mobile networks, these techniques have been developed to support data communications and are not suitable for the support of additional real-time services.

It is an object of the present invention to provide a technique for link adaptation which is suitable for supporting real time services (e.g. IP voice and video) in packet switched networks.

According to the present invention there is provided a method of controlling link adaptation in a communication link at least one end of the communication link have a transmission codec having a plurality of modes of operation, the method comprising: monitoring the condition of a received signal, and forwarding an instruction to change the mode of operation of the transmission codec responsive to a change in the condition of the received signal.

There may be a minimum period between the forwarding of successive instructions. The minimum period may be 160ms.

The instruction to change the codec mode of operation may be a command or a request.

Both ends of the communication link may have a transmission codec. One end of the communication link may forward a command to change the codec mode of operation and the other end of the communication link may forward a request to change the codec mode of operation.

The communication link may be a link in a mobile communications system. The mobile communications system may be a packet switched system.

According to a further aspect of the present invention there is provided a device for maintaining a communication link with another device, including: means for receiving a signal from the other device; means for monitoring the condition of the received signal; means, responsive to a change in the condition of the received signal, for determining a new mode of operation of a transmission codec, and means for transmitting the new mode of operation of the transmission codec to the other device responsive to the change in the condition of the received signal.

The means for transmitting the new mode of operation may be controlled such that there is a minimum period between successive transmissions.

The invention will now be described with regard to a particular example by way of reference to the accompanying drawing in which:-

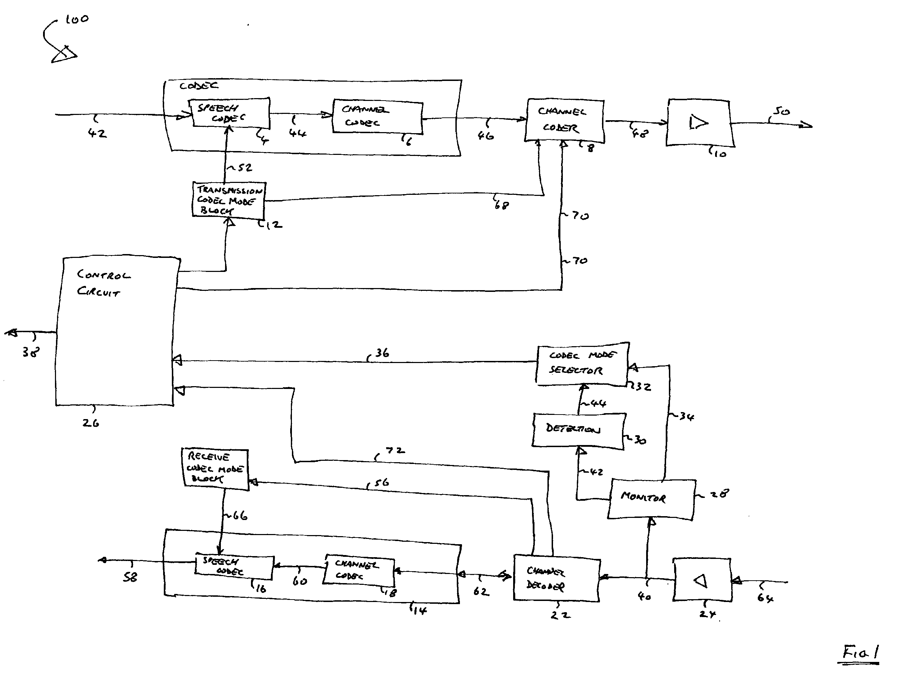

Figure 1 illustrates a block diagram of circuitry suitable for implementing the present invention.

The invention will now be described by way of example to a particular advantageous implementation. It will be understood that the invention is not limited to such an implementation, and may have applicability beyond the example given herein. Where appropriate, modifications to or alternative applications for, the invention are discussed herein.

The invention is discussed herein with specific reference to an example of a real time enhanced GPRS (RT-EGPRS) system. It should be understood, however, that the present invention is more generally applicable to any system which utilises link adaptation. In a wireless system link adaptation adapts the communication links in the up-link and the down-link. More generally, link adaptation adapts the communication links between a transmitter and a receiver at opposite ends of the link.

Referring to Figure 1, there is shown a block diagram of the elements of a transceiver, generally designated by reference numeral 100, of a mobile communication system required to explain an implementation of the present invention. It will be appreciated that the transceiver includes other functional elements essential to the operation of the system, and such functional elements will be familiar to one skilled in the art.

On the transmission side, the transceiver includes a codec 2, including a speech codec 4 and a channel codec 6, a transmission codec mode block 12, a channel coder 8 and an output or transmission block 10.

In operation, during transmission speech activity, natural speech is presented to the codec on line 42. The natural speech is speech encoded in the speech codec 4 in accordance with the codec mode presented on line 52 to the speech codec. The speech codec 4 generates synthesised speech on line 44 which forms an input to the channel codec 6. The channel codec 6 generates synthesised speech at the desired bit rate on line 46. The synthesised speech on line 46 is presented to the channel coder, which represents the physical layer, where the speech is encoded into radio blocks for transmission on the air interface. The output of the channel coder 8 on line 48 forms an input to the output block 10. The output block represents the front-end circuitry of the transmitter, and generates the radio signal output on line 50.

On the receive side, the transceiver includes a codec 14, including a speech codec 16 and a channel codec 18, a receiver codec mode block 20, a channel decoder 22 and an input or receiver block 24.

In operation, during reception of speech, a radio signal is received on line 64, and down-converted and front-end processed by the input block 24. The thus processed received signal is presented on line 40 to the channel decoder 22 where the received signal is processed, for example, by deinterleaving of the radio blocks. The channel decoder operation will be familiar to one skilled in the art. The channel decoded received signal is output on line 62 to the codec 14. The channel codec 18 channel decodes the signal on line 62 and presents an output on line 60 to the speech codec 16. The speech codec 16 speech decodes the signal on line 60 using the codec mode information provided by the receive codec mode block 20 on line 66. The speech codec 16 then presents the received speech on line 58. Thus the receive side operates as a mirror to the transmit side.

Control circuitry generally represented by block 26 controls the operation of the transceiver. The transceiver 100 additionally includes a monitor block 28, a detection block 30, and a codec mode selector block 32.

In operation, the control circuit 26 loads the transmission codec mode block 12 via line 54 with an appropriate codec mode for use by the codec 2. The codec mode in fact controls the mode of the speech codec 4. The codec mode is determined in accordance with the quality of the link between the transceiver and another device with which it has a communication link established. The codec mode determines the transmission rate for data over the link. In good channel conditions, the codec mode will be set such that a high rate is set. In poorer conditions, the rate will be lowered. Conventional start-up procedures, which will be familiar to one skilled in the art, will enable an initial appropriate codec mode to be set for the transmitter.

The codec mode information in the transmission codec mode block 12 is additionally provided on line 68 to the channel coder 8. The channel coder 8 encodes the codec mode information into the radio blocks for use by the receiver on the other end of the radio link to decode the radio signals. The encoding of this information into the radio blocks is well known from GSM link adaptation.

On the receive side, the initial codec mode being used by the transmitter on the other side of the communication link may be communicated by that transmitter. Thus the channel decoder 22 extracts the codec mode information used by the transmitter from the radio blocks of the received signal and provides this to the receive codec mode block 20. The receive codec mode block 20 stores this for use by the speech codec 16 on the receive side.

If the transceiver of Figure 1 is the transceiver of a base station, then it may set the codec mode which the mobile station should use in the transmit side at the other end of the transmission link, and consequently set the receiver codec mode block 20 directly.

In accordance with the present invention, the received signal provided by the input circuitry 24 on line 40 additionally forms an input to the monitor block 28. The monitor block 28 monitors the signal level of the received signal.

The signal level detected by the monitor block 28 is provided on line 42 to the detection block 30. The detection block determines whether the current signal level is different from the previous signal level, and thus detects a change in channel conditions. This may manifest, for example, in a variation, such as a deterioration, in the received signal strength.

The detection block determines whether the change in the signal strength is sufficient to justify a change in the codec mode of the transmitter at the other end of the communication link. Thus, for example, the detection block 30 may detect whether the signal strength has varied by an amount above or below a certain threshold.

If the detection block determines that a change in the codec mode is appropriate, then on line 44 it sends a command to the codec mode selector 32 to select a new codec mode. In accordance with the current signal level determined by the monitor block 28, provided on line 34, the codec mode selector selects the appropriate mode and provides this on line 36 to the control circuit 26.

Responsive to receipt of the new codec mode on line 36, in accordance with the present invention the control circuit 26 controls the transmission circuitry to transmit the new codec mode to the transceiver at the other end of the link.

If the transceiver of Figure 1 is a base station transceiver the codec mode will be transmitted as a codec mode command. If the transceiver of Figure 1 is a mobile station transceiver the codec mode will be transmitted as a codec mode request.

The codec mode request or command is provided by the control circuit on line 70 to the channel coder 8 and interleaved into the radio blocks as appropriate. The codec mode request/command may be interleaved in one burst. The codec mode request/command could be transmitted over PCCCH (multi-messages) or over a burst based RT-PCCCH (single message) in a dedicated (non-contention) or contention mode.

On the receive side a codec mode request or command is retrieved by the channel decoder 22 and supplied on line 72 to the control circuit 26. The control circuit 26 then takes the appropriate action to alter the contents of the receive codec mode block 20. If the transceiver of Figure 1 is a mobile station and a codec mode command is received, the codec mode in the receive codec mode block 20 will be changed to the commanded value. In such a scenario the line 72 may connect directly from the channel decoder 22 to the control circuit 26. If the transceiver of Figure 1 is a base station, then the control circuit 26 will determine whether to change the codec mode responsive to a codec mode request in accordance with conventional techniques known from GSM AMR link adaptation.

In the conventional GSM technique the control circuit 25 causes the codec mode request/command to be sent by the transmit side every 160ms regardless of whether the codec mode has changed or not. According to the present invention, the coded mode request/command is sent dynamically on demand responsive only to a change in the codec mode being necessary or desirable.

Thus the present invention provides a dynamic technique for the communication of codec mode requests and commands. Codec mode requests and commands are sent only when there is a change to the codec mode desired. This dynamic link adaptation can be used during both speech periods and during periods when there is no speech, i.e. discontinuous transmission periods.

In discontinuous transmission periods, on the transmit side there is no natural speech for the codec 2 to encode. Hence only control information is sent and encoded by the channel coder 8. In conventional GSM AMR the codec mode information and the codec mode request/command information are sent during discontinuous transmission. Particularly the codec mode request/command is sent every 160ms.

However in accordance with the invention the codec mode request/command is sent dynamically on demand even when no speech is being transmitted, i.e. during discontinuous transmission.

During speech activity it is mandatory that the codec mode indication is sent, so that the receiver knows the codec mode being used by the transmitter. However, a codec mode request or command need only be sent dynamically on demand.

During speech activity the standard AMR link adaptation procedures as known from circuit switched AMR GSM speech as described above can thus still be applied.

Alternatively the speech RLC/MAC block header, generated by the channel coder 8, may contain a codec mode indication (to decode the current RLC/MAC block) and optionally (when codec mode change is required) the codec mode request/command. This could be achieved by using different combinations for the stealing bits for different speech RLC/MAC block formats. That is, two particular combinations of stealing bits identifies a radio block including a codec mode indication or a codec request/command.

During the discontinuous transmission period at least in one direction, either the UL or the DL, there is no speech activity. The periodic link adaptation used in the standard circuit-switched GSM discontinuous transmission, where the mode command or request is sent every 160ms during silence, reduces considerably the benefits of statistical multiplexing in packet networks. Therefore several improvements to link adaptation during discontinuous transmission, when the present invention is utilised, are presented below.

During discontinuous transmission there is no speech activity, and preferably no codec mode indication is therefore sent. The codec mode indication is not required because there is no speech to decode.

The network only sends codec mode commands in the down-link to the MS to control its UL transmission when the UL codec mode has to be changed due to radio channel conditions or network management (link adaptation on demand rather than periodic as it is the case in GSM AMR link adaptation).

The MS only sends in the UL codec mode requests to the network to control the DL transmission when the DL codec mode has to change.

Preferably the codec mode requests/commands are not sent more often than a certain threshold (e.g. once per 160 ms). This is required in order to reduce the radio signalling overhead due to link adaptation. Without this preferable limitation, the codec mode may be frequently changed as channel modifications continually fluctuate. Placing a limit of 160ms between any two consecutive changes is acceptable, as this is the conventional fixed time interval in GSM. Of course, the limit of time between any two updates may be varied according to any particular implementation.

Preferably the network has the overall control function and can override the codec mode requests from the MS. Thus the network may command the MS to use periodic link adaptation updates (every 160 ms). I.e. the network can tell the MS to function as the known solution's function rather than functioning using the on demand technique in accordance with the invention.

Acknowledgements (ACKs) may be required to acknowledge the UL codec mode requests when "on demand" dynamic link adaptation is implemented in accordance with the present invention. In the standard GSM arrangement, no acknowledgements are needed since if one mode request or command fails then another one is in any event sent 160ms later. However, in accordance with the present invention the mode request/command is only sent if it changes, so it may become important to introduce an acknowledgement so as to ensure that the change in mode has been communicated.

The present invention thus provides a link adaptation scheme suitable for link adaptation of real time services in a packet switched environment. Wherever possible, the present invention is consistent the adaptive multi-rate (AMR) technique known form conventional circuit switched GSM. The technique of the present invention may therefore be called packet adaptive multi-rate (P_AMR) link adaptation.

The new link adaptation scheme for P-AMR does not limit in any way the compatibility with circuit-switched AMR. Thus it is feasible to have tandem free operation between a packet and a circuit switched voice user.

### Reduced SID frame

During discontinuous transmission, it is necessary to periodically send a comfort noise update. In GSM, the comfort noise update is sent in a 247 bit frame known as a SID_UPDATE frame. For the comfort noise update, only the first 35 bits (comfort noise parameters) of the SID_UPDATE frame are required and utilised for the silence noise update. The remaining 212 bits of the SID_UPDATE frame are identification bits.

In accordance with an advantageous embodiment of the present invention, these 35 bits can therefore be sent in a reduced SID frame together with the codec mode indication and optionally codec mode request/command.

In order to further benefit from the silence periods of a speech user it is desired to send only the minimum required information during discontinuous transmission. For the reduced SID_UPDATE frame proposed herein a maximum minimisation is achieved.

The GSM circuit-switched SID_UPDATE frame is sent in four TDMA burst by over coding the comfort noise parameters only for the sake of keeping the same 20ms radio block granularity during speech and silence.

The reduced SID_UPDATE frame proposed herein may be sent in less than 2 bursts over the radio interface depending on the level of channel coding used. This will increase the capacity of the radio channel used to transport SID_UPDATE frames by at least a factor of 2.

The SID_UPDATE frame could be identified either by using the stealing bits if PDTCH (Packet Data Traffic Channel ) is used, or the payload type (PT) field which is part of the RLC/MAC header if PCCCH (Packet Common Control Channel) or RT-PCCCH (Real-Time PCCCH) is used.

Over the radio interface less than 2 bursts may be used to send all the comfort noise and link adaptation information. A normal GSM burst has 114 data bits and takes 0.577ms to transmit. In circuit-switched AMR GSM an SID_UPDATE frame is always sent in 4 bursts. Thus in this preferred embodiment at least double the number of silent users can be accommodated on the same control channels in the preferred embodiment.

Say for example that in AMR GSM one SID_UPDATE frame is sent in 4 bursts in 4 consecutive TDMA frames. This gives one 20ms radio block. So one SID_UPDATE frame is sent in 20ms worth of radio bandwidth. Now if a reduced SID_UPDATE frame occupies only 2 bursts (as an example) it will take only 10ms to transmit this reduced SID_UPDATE frame. In the remaining 10ms another SID_UPDATE frame can be transmitted from another user which is also in a silent period. Thus in 20ms two SID_UPDATE frames are sent whilst with the standard AMR GSM scheme only one SID_UPDATE is always sent in 20ms over the radio interface. Therefore the capacity of the channel used to carry SID_UPDATE frames (in this example) is doubled.

Alternatively data can be multiplexed with the reduced SID_UPDATE frame in the same radio block. One radio block is a 20ms period of continuous transmission over the radio interface using 4 bursts in 4 consecutive TDMA frames; each burst is 0.577ms and each TDMA frame is 4.615ms; thus 4^{*}4.615 = 18.46ms which is approximated with 20ms.

In general a radio block could be formed by any number of bursts in any TDMA frames and not necessarily consecutive frames. Thus the concept of data and reduced SID_UPDATE multiplexing is more general.

The data and reduced SID_UPDATE multiplexing in the same radio block is important as it is possible to benefit of the longer interleaver used over an entire radio block to increase the protection of SID_UPDATE frames and the data which is multiplexed together.

The SID_UPDATE identification bits can be added back to the reduced SID frame once it is received.

The SID_UPDATE identification bits used in circuit switched AMR GSM do not relate to the ID of the transmitter of the SID_UPDATE frame but to the identification of the SID_UPDATE frame itself. For example a user can send speech and SID frame. To discriminate between the two types of frames a 212 bit sequence (unique for all the users and all SID frames) is added to each SID frame.

During the speech activity the radio channel is dedicated (fixed allocated) to the active speech user. The user's ID will be derived from the radio channel number (i.e. for GSM system the pair of time slot and frequency uniquely identifies a radio channel and therefore a user for which this channel is dedicated to). Thus only the AMR codec mode information (i.e. AMR codec mode indication and optional codec mode request/command) is required as the speech packet header. During discontinuous transmission the packet header of the SID_UPDATE frames may contain: the AMR codec mode information (i.e. AMR codec mode indication and optional codec mode request/command) and optionally the transmitter's ID (if dynamic channel allocation is used for example in DL direction). The stealing bits are used to discriminate between speech and SID_UPDATE frames.

The header of the link adaptation message may contain the transmitter's ID, session's ID and optionally the channel coding scheme used to code the message.

Thus the speech decoder will not notice any difference when receiving an SID_UPDATE frame. As the SID_UPDATE identification bits are used in circuit switched AMR GSM it might be desirable to put them back, as they are the same for all SID_UPDATE frames, in order to have compatibility with a circuit switched mobile phone.

These optimised data transmission techniques for both link adaptation messages and SID_UPDATE frames increase the spectral utilisation. Camping more silent users on the available control channels, using the reduced SID_UPDATE frame, leaves more traffic channels to be used by the active speech users and therefore increases the statistical multiplexing gain.

In standard GSM the comfort noise update is transmitted every 160ms together with the mode request or command. In link adpatation according ot he present invention the codec mode request/command is sent on demand.

In addition, preferably only the codec mode request/command is transmitted without the SID_UPDATE comfort noise parameters. However, the SID_UPDATE is sent once at a fixed interval as required, e.g. about once every 500ms.

## Claims

1. A method of controlling link adaptation in a communication link at least one end of the communication link have a transmission codec having a plurality of modes of operation, the method comprising: monitoring the condition of a received signal, and forwarding an instruction to change the mode of operation of the transmission codec responsive to a change in the condition of the received signal.

2. The method of claim 1 in which there is a minimum period between the forwarding of successive instructions.

3. The method of claim 1 in which the minimum period is 160ms.

4. The method of any one of claims 1 to 3 in which the instruction to change the codec mode of operation is a command or a request.

5. The method of any one of claims 1 to 4 in which both ends of the communication link have a transmission codec.

6. The method of claim 5 in which one end of the communication link forwards a command to change the codec mode of operation and the other end of the communication link forwards a request to change the codec mode of operation.

7. The method of any preceding claim in which the communication link is a link in a mobile communications system.

8. The method of claim 7 in which the mobile communications system is a packet switched system.

9. A device for maintaining a communication link with another device, including: means for receiving a signal from the other device; means for monitoring the condition of the received signal; means, responsive to a change in the condition of the received signal, for determining a new mode of operation of a transmission codec, and means for transmitting the new mode of operation of the transmission codec to the other device responsive to the change in the condition of the received signal.

10. The device of claim 9 wherein the means for transmitting the new mode of operation is controlled such that there is a minimum period between successive transmissions.
